(19) Europäisches Patentamt
European Patent Office
Office européen des brevets

(11) **EP 1 589 623 B1**

(12) **EUROPEAN PATENT SPECIFICATION**

(45) Date of publication and mention
of the grant of the patent:
**07.05.2008 Bulletin 2008/19**

(51) Int Cl.:
***H04B 10/17*** *(2006.01)*    ***H01S 3/13*** *(2006.01)*
*H01S 3/131* *(2006.01)*    *H01S 3/30* *(2006.01)*
*H01S 3/094* *(2006.01)*    *H01S 3/067* *(2006.01)*

(21) Application number: **05008750.1**

(22) Date of filing: **21.04.2005**

(54) **Raman amplifier**

Ramanverstärker

Amplificateur Raman

(84) Designated Contracting States:
**DE FR GB IT**

(30) Priority: **23.04.2004 JP 2004128889**

(43) Date of publication of application:
**26.10.2005 Bulletin 2005/43**

(73) Proprietor: **Sumitomo Electric Industries, Ltd.**
**Osaka-shi, Osaka 541-0041 (JP)**

(72) Inventor: **Nakaji, Haruo,**
**c/o Yokohama Works of Sumitomo**
**Yokohama-shi,**
**Kanagawa (JP)**

(74) Representative: **HOFFMANN EITLE**
**Patent- und Rechtsanwälte**
**Arabellastrasse 4**
**81925 München (DE)**

(56) References cited:
**EP-A- 1 122 842**    **GB-A- 2 383 209**
**US-A1- 2004 052 453**    **US-B1- 6 366 395**

• **NAKAJI H: "Lossless dispersion compensating**
**fibre module for wavelength-management**
**networks" ELECTRONICS LETTERS, IEE**
**STEVENAGE, GB, vol. 40, no. 12, 10 June 2004**
**(2004-06-10), pages 756-758, XP006022149 ISSN:**
**0013-5194**

**Description**

BACKGROUND OF THE INVENTION

Field of the Invention

The present invention relates to a Raman amplifier.

Description of the Background Art

In Raman amplifiers, techniques have been proposed that enable the achievement of a flat gain spectrum by properly predetermining each value of the powers of pump lightwaves having a plurality of wavelengths. (See a literature written by Y. Emori et al., "Broadband lossless DCF using Raman amplification pumped by multichannel WDM laser diodes," Electron. Lett., Vol. 34, No. 22, pp. 2145-46, 1998, for example.) However, in the technique described in the above-described literature, in which each value of the powers of pump lightwaves having a plurality of wavelengths is a constant value, when the power of an input signal varies, a gain variation is created due to a saturation tendency of the gain in Raman amplification. For example, US 2004/0052453 discloses an optical Raman amplifier.

SUMMARY OF THE INVENTION

An object of the present invention is to offer a Raman amplifier that can easily reduce the gain variation in Raman amplification even when the power of an input signal varies. The invention is defined in claim 1 below. The dependent claims are directed to optional features and preferred embodiments.

To attain the foregoing object, the present invention offers a Raman amplifier that is provided with:

a) an optical fiber arranged to amplify an input lightwave to produce an output lightwave;
b) a pump-lightwave-supplying means arranged to supply pump lightwaves having a plurality of wavelengths to the optical fiber
c) an input-power-detecting means arranged to detect the power of the input lightwave and to produce a corresponding electric signal; and
d) a control unit arranged to control only the power of the pump lightwave having the shortest wavelength among the pump lightwaves in response to said electric signal so that the average value of the gain of the Raman amplification in the optical fiber experienced over an intended wavelength range by the input lightwave can be maintained constant.

According to an aspect of the present invention, the Raman amplifier may have the following features. The control unit performs the following functions:

(a) to memorize a relationship between the power of the pump lightwave having the shortest wavelength and the power of the input lightwave to be established to maintain the foregoing average value constant; and
(b) to control the power of the pump lightwave having the shortest wavelength in accordance with both the power of the input lightwave detected by the input-power-detecting means and the relationship it memorizes.

In this case, the foregoing relationship may be a relationship expressed as a linear function. Furthermore, in this case, the Raman amplifier may have the following features:

(a) the pump-lightwave-supplying means supplies to the optical fiber the pump lightwaves in the direction opposite to the traveling direction of the input lightwave; and
(b) the input-power-detecting means or the control unit is provided with a retarding means for giving a retarding time corresponding to the time needed for the input lightwave to travel over the optical fiber.

Alternatively, the Raman amplifier may have the following features:

(a) the pump-lightwave-supplying means supplies to the optical fiber the pump lightwaves in the same direction as the traveling direction of the input lightwave; and
(b) the Raman amplifier is further provided with a retarding medium for retarding the input lightwave by a predetermined time, the retarding medium being placed between the input-power-detecting means and the pump-lightwave-supplying means both placed on a path for the input lightwave.

Here, the predetermined time may be the time from the instant when the input-power-detecting means detects a value to the instant when the control unit performs the control.

According to another aspect of the present invention, the Raman amplifier may have the following features. The Raman amplifier is further provided with:

an output-power-detecting means that detects the power of the output lightwave,

and the control unit controls the power of the pump lightwave having the shortest wavelength in accordance with both the power of the input lightwave detected by the input-power-detecting means and the power of the output lightwave detected by the output-power-detecting means. In this case, the control unit may control the power of the pump lightwave having the shortest wavelength in accordance with both the power of the input lightwave detected by the input-power-detecting means and the power of the output lightwave detected by the output-power-detecting means, the power of the output lightwave being detected at the instant when a time needed for the input lightwave to travel over the optical fiber has just elapsed from the instant when the power of the input lightwave is detected.

Advantages of the present invention will become apparent from the following detailed description, which illustrates the best mode contemplated to carry out the invention. The invention can also be carried out by different embodiments, and their details can be modified in various respects, all without departing from the invention. Accordingly, the accompanying drawing and the following description are illustrative in nature, not restrictive.

BRIEF DESCRIPTION OF THE DRAWING

The present invention is illustrated to show examples, not to show limitations, in the figures of the accompanying drawing. In the drawing, the same reference signs and numerals refer to similar elements.

In the drawing:

Figure 1 is a conceptual diagram showing a Raman amplifier of the first embodiment of the present invention.
Figure 2 is a graph showing a gain spectrum of a Raman amplifier of the first embodiment using the power of the input signal lightwave as a parameter.
Figure 3 is a graph showing a gain spectrum of a Raman amplifier of the first embodiment using the power of the input signal lightwave as a parameter when the power of the pump lightwaves was not controlled as a comparative example.
Figure 4 is a conceptual diagram showing a Raman amplifier of the second embodiment of the present invention.
Figure 5 is a graph showing a gain spectrum of a Raman amplifier of the second embodiment using the power of the input signal lightwave as a parameter.
Figure 6 is a graph showing a gain spectrum of a Raman amplifier of the second embodiment using the power of the input signal lightwave as a parameter when the power of the pump lightwaves was maintained constant as a comparative example.
Figure 7 is a graph showing the relationship between the power of the input signal lightwave and the power of the pump lightwave having the shortest wavelength when the pump lightwave having the shortest wavelength is controlled such that the average gain becomes constant in the first and second embodiments.
Figure 8 is a conceptual diagram showing a Raman amplifier of the third embodiment of the present invention.
Figure 9 is a conceptual diagram -showing a Raman amplifier of the fourth embodiment of the present invention.
Figure 10 is a conceptual diagram showing a Raman amplifier of the fifth embodiment of the present invention.
Figure 11 is a conceptual diagram showing a Raman amplifier of the sixth embodiment of the present invention.

DETAILED DESCRIPTION OF THE INVENTION

The present inventor intensely studied the gain control of the Raman amplification and found that it is possible to reduce the variation in the gain spectrum by controlling only the power of the pump lightwave having the shortest wavelength among the pump lightwaves having a plurality of wavelengths even when the power of the input signal lightwave varies. Thus, the present invention was accomplished.

(The first embodiment)

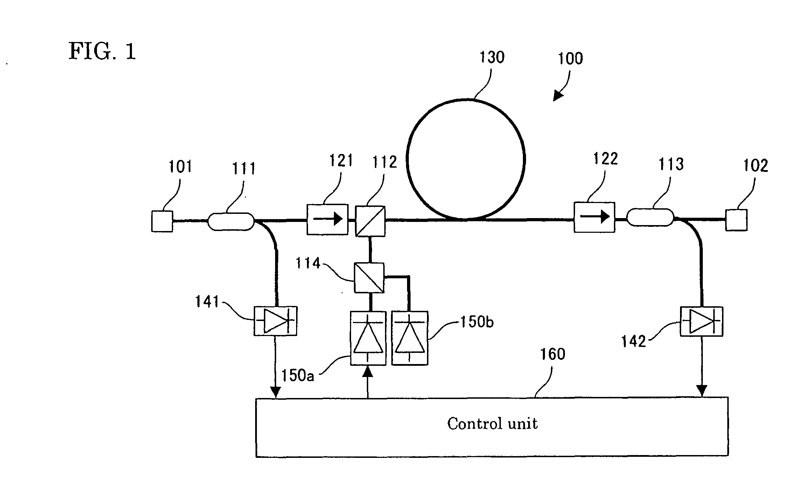

Figure 1 is a conceptual diagram showing a Raman amplifier 100 of the first embodiment of the present invention. In the Raman amplifier 100, a signal lightwave (input lightwave) enters at a light-entering end 101 and is Raman-amplified. The Raman-amplified signal lightwave (output lightwave) exits from a light-exiting end 102. The Raman amplifier 100 is provided with on the signal-lightwave-propagating path from the light-entering end 101 to the light-exiting end 102 a fiber optic coupler 111, an optical isolator 121, a fiber optic coupler 112, a Raman-amplifying optical fiber 130, an optical isolator 122, and a fiber optic coupler 113 in this order. In addition, the Raman amplifier 100 is provided with a photodiode 141 connected to the fiber optic coupler 111, a fiber optic coupler 114 connected to the fiber optic coupler 112, laser diodes 150a and 150b connected to the fiber optic coupler 114, a photodiode 142 connected to the fiber optic coupler 113, and a control unit 160 connected to the photodiodes 141 and 142 and the laser diode 150a.

The fiber optic coupler 111 branches a signal lightwave having entered at the light-entering end 101 to send some portion of it to the photodiode 141 and the remaining portion to the optical isolator 121. The photodiode 141 receives the signal lightwave having arrived from the fiber optic coupler 111 to produce an electric signal in accordance with the power of the inputted signal lightwave and sends it to the control unit 160.

The fiber optic coupler 112 receives pump lightwaves having a plurality of wavelengths sent from the fiber optic coupler 114 and sends them to the optical fiber 130. The fiber optic coupler 112 receives a signal lightwave having traveled from the fiber optic coupler 111 via the optical isolator 121 and sends it to the optical fiber 130.

The fiber optic coupler 113 receives a signal lightwave having traveled from the optical fiber 130 via the optical isolator 122 and branches it to send some portion of it to the photodiode 142 and the remaining portion to the light-exiting end 102. The photodiode 142 receives the signal lightwave having arrived from the fiber optic coupler 113 to produce an electric signal in accordance with the power of the inputted signal lightwave and sends it to the control unit 160.

The fiber optic coupler 114 receives pump lightwaves having wavelengths different from each other sent from the laser diodes 150a and 150b. Then, it combines the pump lightwaves and sends the combined pump lightwaves having a plurality of wavelengths to the fiber optic coupler 112. The optical isolators 121 and 122 allow lightwaves to pass in a forward direction from the light-entering end 101 to the light-exiting end 102 and prevent them from passing in a backward direction. The optical fiber 130 receives pump lightwaves and a signal lightwave both sent from the fiber optic coupler 112 and Raman-amplifies the signal lightwave to send the Raman-amplified signal lightwave to the optical isolator 122.

The laser diodes 150a and 150b each output a pump lightwave for Raman amplification having a wavelength different from each other. Here, it is assumed that the wavelength of the pump lightwave outputted from the laser diode 150a is shorter than that of the pump lightwave outputted from the laser diode 150b. In other words, it is assumed that the pump lightwave outputted from the laser diode 150a is the pump lightwave having the shortest wavelength among the pump lightwaves having a plurality of wavelengths.

The control unit 160 receives the electric signals sent from the photodiodes 141 and 142 to control the power of the pump lightwave to be outputted from the laser diode 150a in accordance with these electric signals so that the gain of the Raman amplification can become constant. Specifically, it is desirable that the control unit 160 be structured with an electric circuit for performing the control or the like.

Here, the laser diodes 150a and 150b and the fiber optic couplers 112 and 114, as a whole, act as a pump-lightwave-supplying means that supplies pump lightwaves having a plurality of wavelengths to the optical fiber 130. As the pump-lightwave-supplying means, the laser diode may be replaced with another laser light source. The photodiode 141 and the fiber optic coupler 111, as a whole, act as an input-power-detecting means that detects the power of the signal lightwave to be inputted into the optical fiber 130. The photodiode 142 and the fiber optic coupler 113, as a whole, act as an output-power-detecting means that detects the power of the output signal lightwave outputted from the optical fiber.

The Raman amplifier 100 operates as described below. Pump lightwaves outputted from the laser diodes 150a and 150b are combined by the fiber optic coupler 114. The combined pump lightwaves are supplied to the Raman-amplifying optical fiber 130 via the fiber optic coupler 112. A signal lightwave having entered at the light-entering end 101 travels through the fiber optic coupler 111, the optical isolator 121, and the fiber optic coupler 112 and enters the optical fiber 130 to be Raman-amplified there. The Raman-amplified signal lightwave travels through the optical isolator 122 and the fiber optic coupler 113 and exits from the light-exiting end 102.

The signal lightwave having entered at the light-entering end 101 is branched by the fiber optic coupler 111, and some portion of it is sent to the photodiode 141. Then, the photodiode 141 outputs an electric signal in accordance with the amount of the light it receives. The Raman-amplified signal lightwave is branched by the fiber optic coupler 113, and some portion of it is sent to the photodiode 142. Then, the photodiode 142 outputs an electric signal in accordance with the amount of the light it receives.

The control unit 160 monitors the power of the input signal lightwave in accordance with the electric signal sent from the photodiode 141. It also monitors the power of the output signal lightwave in accordance with the electric signal sent from the photodiode 142. The control unit 160 calculates the gain of the Raman amplification using the monitored powers of the input and output signal lightwaves. Then, it controls the power of the pump lightwave to be outputted from the laser diode 150a so that the gain of the Raman amplification can become constant.

An example of this embodiment is explained below. It is assumed that the optical fiber 130 is a dispersion-compensating fiber having a length of 9.9 km. It is assumed that the center wavelength of the pump lightwave outputted from the laser diode 150a is 1,435.4 nm, and that from the laser diode 150b is 1,462.2 nm. Signal lightwaves are inputted into the Raman amplifier 100 over 32 channels, which are distributed in a band of 1,534.25 to 1,558.98 nm at intervals of 100 GHz in frequency. The signal lightwaves in the individual channels have the same power.

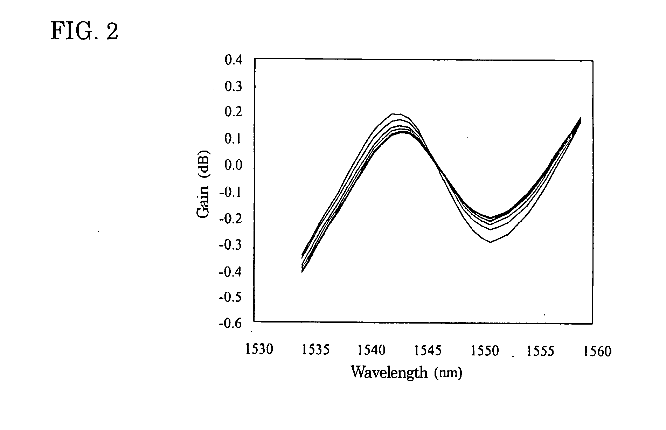

The power of the input signal lightwave was varied from -32 dBm/ch to -5 dBm/ch, and the control unit 160 performed a control operation such that the average gain in the band of the signal lightwave became constant. In this case, the power of the pump lightwave outputted from the laser diode 150b was maintained constant. Figure 2 is a graph showing a gain spectrum of the Raman amplifier of the first embodiment using the power of the input signal lightwave as a parameter. Even though the power of the input signal lightwave was varied from -32 dBm/ch to -5 dBm/ch (the variation is 27 dB), the gain variation was suppressed to about ±0.1 dBpp.

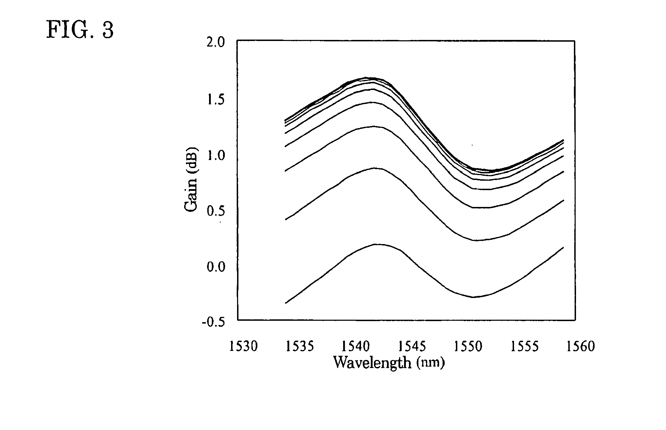

As a comparative example for the above-described control, another Raman amplification was conducted under the same condition as above, except that the power of the pump lightwave outputted from the laser diode 150a was not controlled (the power of the pump lightwave in individual channels is maintained constant). Figure 3 is a graph showing a gain spectrum of a Raman amplifier of the first embodiment using the power of the input signal lightwave as a parameter when the power of the pump lightwaves was not controlled as Comparative example 1. In this case, the power of the pump lightwave outputted from each of the laser diodes 150a and 150b was predetermined such that when the power of the input signal lightwave was -5 dBm/ch, the average value of the net gain was about 0 dB and the gain spectrum became more flattened than in any other cases. In Comparative example 1, a gain variation of about 1.5 dBpp was produced at the maximum. In addition, as the power of the input signal lightwave decreased, the gain increased.

The result obtained in the example of the first embodiment shows that even when the power of the input signal lightwave varies, the stability of the gain spectrum can be achieved by controlling only the power of the pump lightwave having the shortest wavelength so that the average gain in the band of the signal lightwave can become constant. In other words, the first embodiment enables an easy reduction in the gain variation in the Raman amplification. Furthermore, as explained in the first embodiment, when the powers of the input and output signal lightwaves are monitored and the obtained values are referred to control the power of the pump lightwave having the shortest wavelength, a more proper control of the gain variation in the Raman amplification can be performed.

(The second embodiment)

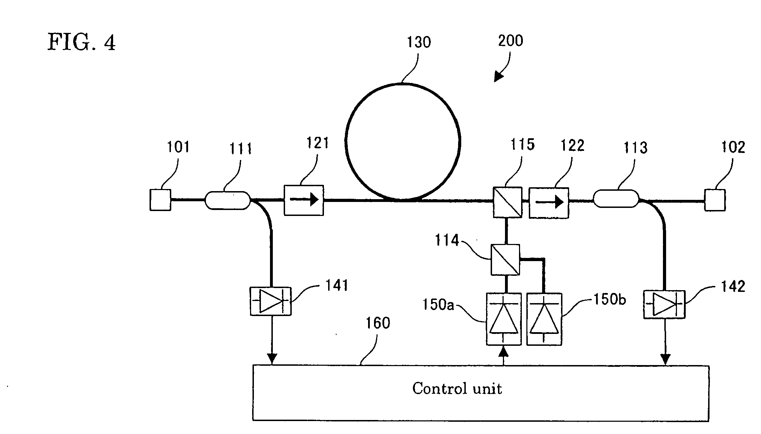

In the first embodiment, the pump lightwaves having a plurality of wavelengths are supplied to the optical fiber 130 in the same direction as that of the signal lightwave. Next, the second embodiment is explained in which the pump lightwaves having a plurality of wavelengths are supplied to the optical fiber 130 in the direction opposite to that of the signal lightwave. Figure 4 is a conceptual diagram showing a Raman amplifier 200 of the second embodiment of the present invention. In the second embodiment, a fiber optic coupler 115 for supplying pump lightwaves having a plurality of wavelengths to the optical fiber 130 is placed between the optical fiber 130 and an optical isolator 122 on the path of a signal lightwave.

The fiber optic coupler 115 receives pump lightwaves having a plurality of wavelengths outputted from the fiber optic coupler 114 and supplies them to the Raman-amplifying optical fiber 130. In addition, the fiber optic coupler 115 receives a signal lightwave outputted from the optical fiber 130 and supplies it to the optical isolator 122.

An example of this embodiment is explained below. It is assumed that the conditions for the optical fiber 130, the signal lightwave, and the pump lightwave outputted from each of the laser diodes 150a and 150b are the same as those in the first embodiment.

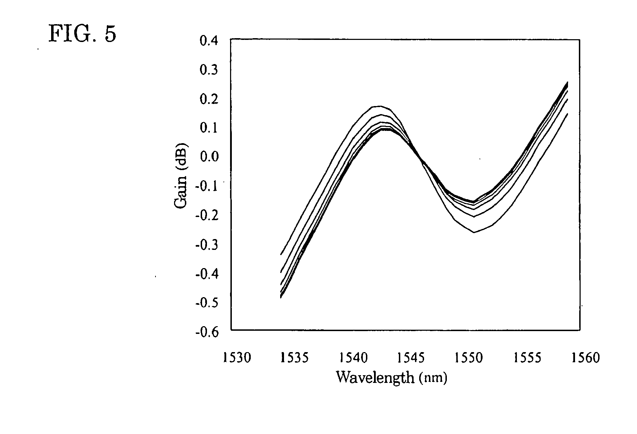

Figure 5 is a graph showing a gain spectrum of a Raman amplifier of the second embodiment using the power of the input signal lightwave as a parameter. Even though the power of the input signal lightwave was varied from -32 dBm/ch to -5 dBm/ch (the variation is 27 dBm/ch), the gain variation was suppressed to about ±0.15 dBpp.

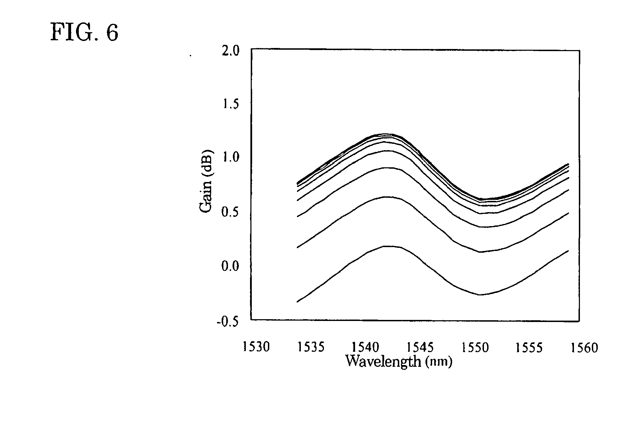

Figure 6 is a graph showing a gain spectrum of a Raman amplifier of the second embodiment using the power of the input signal lightwave as a parameter when the power of the pump lightwaves was maintained constant as Comparative example 2. In Comparative example 2, a gain variation of about 1.0 dBpp was produced at the maximum. In this case, the comparison of the result with that obtained in the case of the forward pumping shown in Fig. 3 shows that the forward pumping produces a larger amount of variation in gain resulting from the variation in the power of the input signal lightwave. The reason for this is that the Raman amplification by the forward pumping creates gain saturation more readily.

(The third embodiment)

The present inventor, in examining and studying the first and second embodiments and others, found that there is a relationship between the power of the pump lightwave having the shortest wavelength for rendering the gain of the Raman amplification constant and the power of the input signal lightwave.

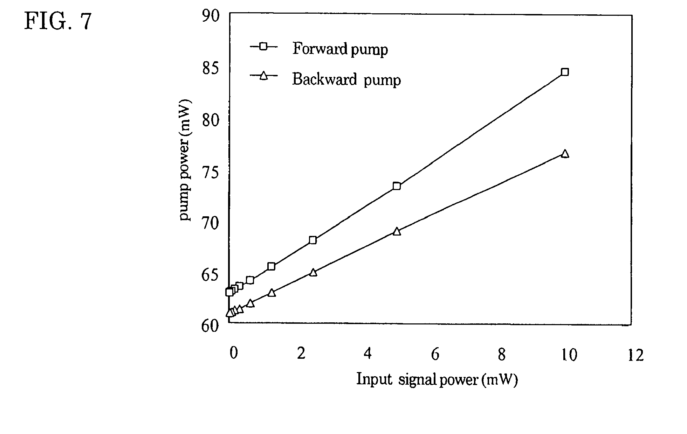

Figure 7 is a graph showing the relationship between the power of the input signal lightwave and the power of the pump lightwave having the shortest wavelength (the pump lightwave that is outputted from the laser diode 150a and that has a wavelength of 1,435.4 nm) when the pump lightwave having the shortest wavelength is controlled such that the average gain becomes constant in the first and second embodiments. The power of the input signal lightwave and the power of the pump lightwave having the shortest wavelength have a relationship expressed as a linear function.

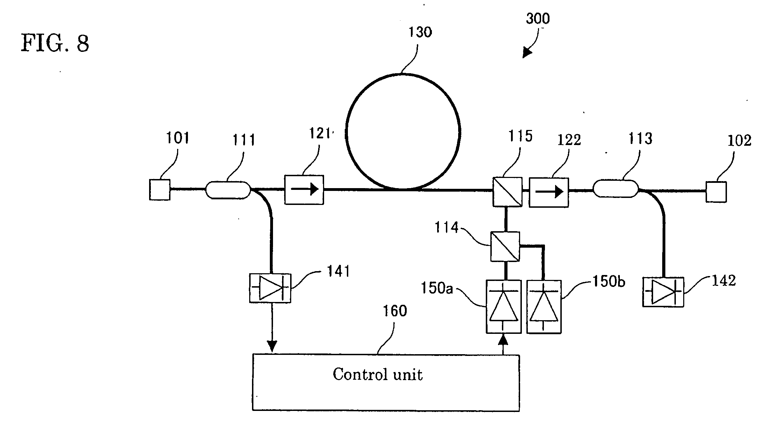

The third embodiment utilizes this relationship to control the gain of the Raman amplification. Figure 8 is a conceptual diagram showing a Raman amplifier 300 of the third embodiment of the present invention. Figure 8 shows that the control unit 160 receives only the electric signal outputted from the photodiode 141. The control unit 160 memorizes the above-described relationship and, based on this relationship, calculates the power of the pump lightwave having the shortest wavelength using the monitored power of the input signal lightwave. Then, the control unit 160 controls the power of the pump lightwave to be outputted from the laser diode 150a so that the power can coincide with the calculated value. More specifically, the power of the pump lightwave having the shortest wavelength is calculated using the following equation expressed as a linear function:

$$\text{the power of the pump lightwave having the shortest wavelength (mW)}$$

$$= a \times \text{the power of the input signal lightwave (mW)} + b,$$

where "a" and "b" are constants.

This embodiment demonstrates that the gain variation in the Raman amplification can be easily reduced when the power of the pump lightwave having the shortest wavelength is controlled based on the relationship between the power of the pump lightwave having the shortest wavelength and the power of the input signal lightwave to be established to maintain the gain constant, especially a relationship expressed as a linear function.

When the power of the pump lightwave having the shortest wavelength is controlled so that the average gain can be maintained constant, the relationship between the power of the input signal lightwave and the power of the pump lightwave having the shortest wavelength, which relationship is expressed as a linear function, is established even in the case of the bidirectional pumping. In this case, when the shortest wavelength of the forward pumping lightwave differs from that of the backward pumping lightwave, only the pump lightwave having a shorter wavelength needs to be controlled. When the shortest wavelength of the forward pumping lightwave is the same as that of the backward pumping lightwave, both the pump lightwaves having the same shortest wavelength need to be controlled under the condition that they have the same power.

(The fourth embodiment)

During the operation of a Raman amplifier, when the power of the input signal lightwave varies abruptly, the gain of the Raman amplification varies transiently. Therefore, in order to control the gain so that it can remain constant without transient variations even when the power of the input signal lightwave varies abruptly, it is necessary to control the gain at high speed so that the gain can maintain the fixed value. Generally, a Raman-amplifying optical fiber has a length of at least several kilometers, which is longer than that of a rare-earth-doped fiber amplifier. Consequently, it is necessary to design the control system considering the time during which the signal lightwave travels over the Raman-amplifying optical fiber.

In a backward pumping Raman amplifier, the transient variation in gain can be suppressed by equalizing the time from the variation of the power of the input signal lightwave to the variation of the power of the pump lightwave with the time during which the signal lightwave travels over the Raman-amplifying optical fiber. Therefore, in a backward pumping Raman amplifier, it is desirable that the feedforward control system for controlling the power of the pump lightwave by detecting the power of the input signal lightwave be provided with a retarding means for giving a retarding time that is equal to the time during which the signal lightwave travels over the Raman-amplifying optical fiber. Two types of retarding means are available: one gives a retarding time on an electric circuit, and the other is an optical retarding medium.

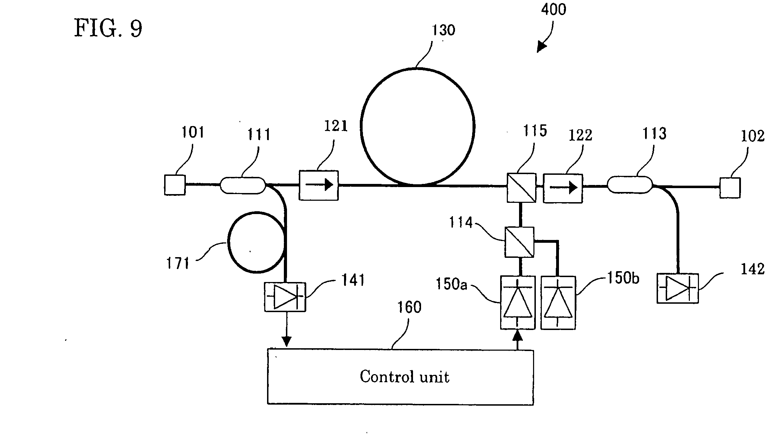

Figure 9 is a conceptual diagram showing a Raman amplifier 400 of the fourth embodiment of the present invention. The Raman amplifier 400 is provided with between the fiber optic coupler 111 and the photodiode 114 a retarding medium 171 for retarding the signal lightwave by a predetermined time. As the retarding medium 171, it is desirable to use a retarding fiber or the like. Here, it is desirable that the predetermined time be a time that gives a proper timing to the control unit 160 for controlling the laser diode 150a in consideration of the time during which the signal lightwave travels over the optical fiber 130. For example, it is desirable that the photodiode 141 make reference to the power of the signal lightwave at the instant when a time needed for the signal lightwave to travel over the optical fiber 130 has just elapsed from the instant when the fiber optic coupler 111 outputs the signal lightwave to the retarding fiber 171.

The above-described structure enables the control of the power of the pump lightwave in consideration of the time during which the signal lightwave travels over the optical fiber 130. As a result, this embodiment can suppress the transient variation in the gain of the Raman amplification.

The above description is for the backward pumping Raman amplifier. In the forward pumping Raman amplifier, the transient variation in the gain can be suppressed by varying the power of the pump lightwave nearly concurrently with the variation in the power of the input signal lightwave. However, because a control circuit usually has a response time, it is extremely difficult to control the power of the pump lightwave concurrently with the variation in the power of the input signal lightwave.

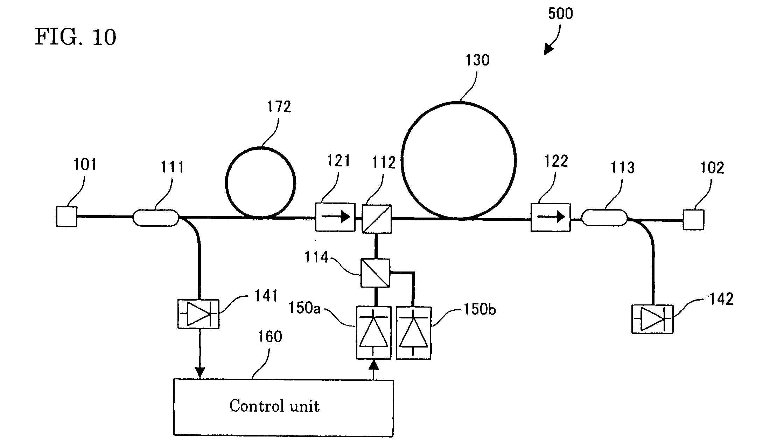

Figure 10 is a conceptual diagram showing a Raman amplifier 500 of the fifth embodiment of the present invention. The Raman amplifier 500 shown in Fig. 10 suppresses the transient variation in the gain in the forward pumping. The Raman amplifier 500 is provided with between the fiber optic coupler 111 and the optical isolator 121 a retarding medium 172 for retarding the signal lightwave by a predetermined time. Here, it is desirable that the predetermined time be a time that elapses from the instant when the photodiode 141 receives the signal lightwave to the instant when the control unit 160 carries out the control by referring to the power of the inputted signal lightwave. The above-described structure can suppress the transient variation in the gain of the Raman amplification because the signal lightwave is inputted into the optical fiber 130 nearly concurrently together with the pump lightwave controlled in accordance with the power of the signal lightwave.

The Raman amplifier having the above-described structure can perform the control that takes into consideration the time from the detection of the power of the input signal lightwave to the control of the power of the pump lightwave.

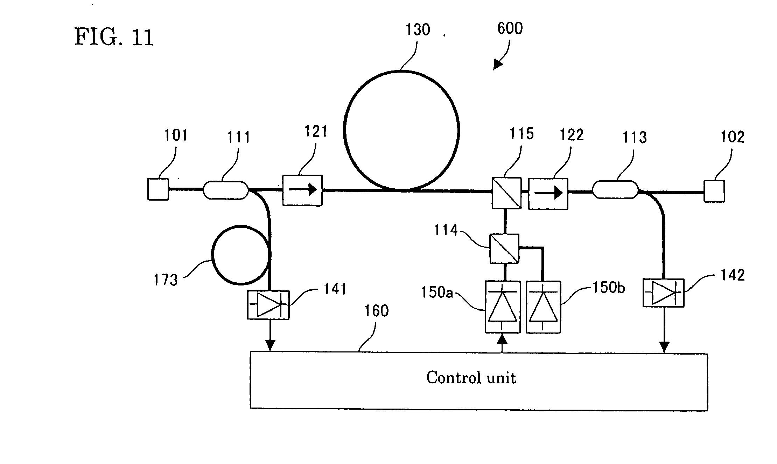

In addition, in the system that monitors both the powers of the input and output lightwaves, also, a time difference corresponding to the length of the optical fiber occurs between the monitoring of the input signal lightwave and the monitoring of the output signal lightwave. Figure 11 is a conceptual diagram showing a Raman amplifier 600 of the sixth embodiment of the present invention. The Raman amplifier 600 shown in Fig. 11 prevents the time difference from occurring in this system. The Raman amplifier 600 is provided with between the fiber optic coupler 111 and the photodiode 141 a retarding medium 173 for retarding the signal lightwave by a predetermined time. Here, it is desirable that the predetermined time be a time that prevents the occurrence of the time difference between the monitoring of the input signal lightwave and the monitoring of the output signal lightwave. The above-described structure can not only suppress the transient variation in the gain of the Raman amplification but also detect the gain with high precision in time.

The present invention is described above in connection with what is presently considered to be the most practical and preferred embodiments. However, the invention is not limited to the disclosed embodiments, but, on the contrary, is intended to cover various modifications and equivalent arrangements.

**Claims**

1. A Raman amplifier (100) comprising:

   a) an optical fiber (130) arranged to amplify an input lightwave to produce an output lightwave;
   b) a pump-lightwave-supplying means (150a, 150b, 112, 114) arranged to supply pump lightwaves having a plurality of wavelengths to the optical fiber (130);
   c) an input-power-detecting means (141, 111) arranged to detect the power of the input lightwave and to produce a corresponding electric signal; **characterized by**
   d) a control unit (160) arranged to control only the power of the pump lightwave having the shortest wavelength among the pump lightwaves in response to said electric signal so that the average value of the gain of the Raman amplification in the optical fiber (130) experienced over an intended wavelength range by the input lightwave can be maintained constant.

2. A Raman amplifier as defined by claim 1, wherein the control unit (160) is arranged to;

   a) memorize a relationship between the power of the pump lightwave having the shortest wavelength and the power of the input lightwave to be established to maintain the average value constant; and
   b) control the power of the pump lightwave having the shortest wavelength in accordance with both the electric signal and the relationship it memorizes.

3. A Raman amplifier as defined by claim 2, wherein the relationship is a relationship expressed as a linear function.

4. A Raman amplifier as defined by claim 2, wherein:

   (a) the pump-lightwave-supplying means (150a, 150b, 112, 114) supplies to the optical fiber (130) the pump lightwaves in the direction opposite to the travelling direction of the input lightwave; and

(b) one of the input-power-detecting means (141, 111) and the control unit (160) is provided with a retarding means (171, 172, 173) for giving a retarding time corresponding to the time needed for the input lightwave to travel over the optical fiber (130).

5. A Raman amplifier as defined by claim 2, the pump-lightwave-supplying means supplying (150a, 150b, 112, 114) to the optical fiber (130) the pump lightwaves in the same direction as the travelling direction of the input lightwave; the Raman amplifier further comprising a retarding medium (171, 172, 173) for retarding the input lightwave by a predetermined time, the retarding medium (171, 172, 173) being placed between the input-power-detecting means (141, 111) and the pump-lightwave-supplying means (150a, 150b, 112, 114) both placed on a path for the input lightwave.

6. A Raman amplifier as defined by claim 5, wherein the predetermined time is the time from the instant when the input-power-detecting means (141, 111) detects a value to the instant when the control unit (160) performs the control.

7. A Raman amplifier as defined by claim 1, the Raman amplifier further comprising;

an output-power-detecting means (142, 113) arranged to detect the power of the output lightwave;

the control unit (160) arranged to control the power of the pump lightwave having the shortest wavelength in accordance with both the electric signal and the power of the output lightwave detected by the output-power-detecting means (142, 113).

8. A Raman amplifier as defined by claim 7, wherein the control unit (160) is arranged to control the power of the pump lightwave having the shortest wavelength in accordance with both the electric signal and the power of the output lightwave detected by the output-power-detecting means (142, 113), the power of the output lightwave being detected at the instant when a time needed for the input lightwave to travel over the optical fiber (130) has just elapsed from the instant when the power of the input lightwave is detected.

**Patentansprüche**

1. Ramanverstärker (100), bei welchem vorgesehen sind:

a) eine Lichtleitfaser (130), die so ausgebildet ist, dass sie eine Eingangslichtwelle zur Erzeugung einer Ausgangslichtwelle verstärkt;

b) eine Pumplichtwellen-Zuführvorrichtung (150a, 150b, 112, 114), die dazu ausgebildet ist, Pumplichtwellen, die mehrere Wellenlängen aufweisen, der Lichtleitfaser (130) zuzuführen;

c) eine Eingangsleistungs-Erfassungsvorrichtung (141, 111), die zur Erfassung der Leistung der Eingangslichtwelle und zur Erzeugung eines entsprechenden elektrischen Signals ausgebildet ist; **gekennzeichnet durch**

d) eine Steuereinheit (160), die so ausgebildet ist, dass sie nur die Leistung der Pumplichtwelle steuert, welche unter den Pumplichtwellen die kürzeste Wellenlänge aufweist, in Reaktion auf das elektrische Signal, sodass der Mittelwert der Verstärkung der Ramanverstärkung in der Lichtleitfaser (130), die in einem gewünschten Wellenlängenbereich **durch** die Eingangslichtwelle auftritt, konstant gehalten werden kann.

2. Ramanverstärker nach Anspruch 1, bei welchem die Steuereinheit (160) so ausgebildet ist, dass sie

a) eine Beziehung zwischen der Leistung der Pumplichtwelle mit der kürzesten Wellenlänge und der zu erzielenden Leistung der Eingangslichtwelle speichert, um den Mittelwert konstant zu halten; und

b) die Leistung der Pumplichtwelle mit der kürzesten Wellenlänge in Abhängigkeit sowohl von dem elektrischen Signal als auch der Beziehung, welche sie speichert, steuert.

3. Ramanverstärker nach Anspruch 2, bei welchem die Beziehung eine Beziehung ist, die als eine lineare Funktion ausgedrückt ist.

4. Ramanverstärker nach Anspruch 2, bei welchem:

a) die Pumplichtwellen-Zuführvorrichtung (150a, 150b, 112, 114) der Lichtleiterfaser (130) die Pumplichtwellen in Richtung entgegengesetzt zur Ausbreitungsrichtung der Eingangslichtwelle zuführt; und

b) entweder die Eingangsleistungs-Erfassungsvorrichtung (141, 111) oder die Steuereinheit (160) mit einer Verzögerungsvorrichtung (171, 172, 173) versehen ist, um eine Verzögerungszeit bereitzustellen, welche der Zeit entspricht, die von der Eingangslichtwelle zur Ausbreitung über die Lichtleitfaser (130) benötigt wird.

5. Ramanverstärker nach Anspruch 2, bei welchem die Pumplichtwellen-Zuführvorrichtung (150a, 150b, 112, 114) die Pumplichtwellen der Lichtleitfaser (130) in derselben Richtung wie der Ausbreitungsrichtung der Eingangslichtwelle zuführt;
und der Ramanverstärker weiterhin ein Verzögerungsmedium (171, 172, 173) zum Verzögern der Eingangslichtwelle um eine vorbestimmte Zeit aufweist, wobei das Verzögerungsmedium (171, 172, 173) zwischen der Eingangsleistungs-Erfassungsvorrichtung (141, 111) und der Pumplichtwellen-Zuführvorrichtung (150a, 150b, 112, 114) angeordnet ist, die beide auf einem Weg für die Eingangslichtwelle angeordnet sind.

6. Ramanverstärker nach Anspruch 5, bei welchem die vorbestimmte Zeit die Zeit von dem Zeitpunkt, wenn die Eingangsleistungs-Erfassungsvorrichtung (141, 111) einen Wert erfasst, bis zu dem Zeitpunkt ist, an welchem die Steuereinheit (160) die Steuerung durchführt.

7. Ramanverstärker nach Anspruch 1, wobei der Ramanverstärker weiterhin aufweist:

   eine Ausgangsleistungs-Erfassungsvorrichtung (142, 113), die so ausgebildet ist, dass sie die Leistung der Ausgangslichtwelle erfasst;
   wobei die Steuereinheit (160) dazu ausgebildet ist, die Leistung der Pumplichtwelle mit der kürzesten Wellenlänge in Abhängigkeit sowohl von dem elektrischen Signal als auch der Leistung der Ausgangslichtwelle zu steuern, die von der Ausgangsleistungs-Erfassungsvorrichtung (142, 113) erfasst wird.

8. Ramanverstärker nach Anspruch 7, bei welchem die Steuereinheit (160) dazu ausgebildet ist, die Leistung der Pumplichtwelle mit der kürzesten Wellenlänge in Abhängigkeit sowohl von dem elektrischen Signal als auch der Leistung der Ausgangslichtwelle zu steuern, die von der Ausgangsleistungs-Erfassungsvorrichtung (142, 113) erfasst wird, wobei die Leistung der Ausgangslichtwelle zu dem Zeitpunkt erfasst wird, wenn ein Zeitraum, welchen die Einganslichtwelle benötigt, um sich über die Lichtleitfaser (130) auszubreiten, unmittelbar vergangen ist seit dem Zeitpunkt, an welchem die Leistung der Eingangslichtwelle erfasst wird.

## Revendications

1. Amplificateur de Raman (100) comprenant :

   a) une fibre optique (130) qui est agencée pour amplifier une onde lumineuse d'entrée afin de produire une onde lumineuse de sortie ;
   b) un moyen d'application d'onde lumineuse de pompage (150a, 150b, 112, 114) qui est agencé pour appliquer des ondes lumineuses de pompage présentant une pluralité de longueurs d'onde sur la fibre optique (130) ;
   c) un moyen de détection de puissance d'entrée (141, 111) qui est agencé pour détecter la puissance de l'onde lumineuse d'entrée et pour produire un signal électrique correspondant,
   **caractérisé par** :
   d) une unité de commande (160) qui est agencée pour commander seulement la puissance de l'onde lumineuse de pompage présentant la longueur d'onde la plus courte parmi les ondes lumineuses de pompage en réponse audit signal électrique de telle sorte que la valeur moyenne du gain de l'amplification de Raman dans la fibre optique (130) subi sur une plage de longueurs d'onde visée par l'onde lumineuse d'entrée puisse être maintenue constante.

2. Amplificateur de Raman selon la revendication 1, dans lequel l'unité de commande (160) est agencé pour :

   a) mémoriser une relation entre la puissance de l'onde lumineuse de pompage présentant la longueur d'onde la plus courte et la puissance de l'onde lumineuse d'entrée à établir afin de maintenir constante la valeur moyenne ; et
   b) commander la puissance de l'onde lumineuse de pompage présentant la longueur d'onde la plus courte conformément à la fois au signal électrique et à la relation qu'elle mémorise.

3. Amplificateur de Raman selon la revendication 2, dans lequel la relation est une relation exprimée en tant que fonction linéaire.

**4.** Amplificateur de Raman selon la revendication 2, dans lequel :

a) le moyen d'application d'onde lumineuse de pompage (150a, 150b, 112, 114) applique sur la fibre optique (130) les ondes lumineuses de pompage dans la direction opposée à la direction de déplacement de l'onde lumineuse d'entrée ; et
b) un élément pris parmi le moyen de détection de puissance d'entrée (141, 111) et l'unité de commande (160) est muni d'un moyen de retardement (171, 172, 173) pour assurer un temps de retardement correspondant au temps nécessaire pour que l'onde lumineuse d'entrée se déplace sur la fibre optique (130).

**5.** Amplificateur de Raman selon la revendication 2, le moyen d'application d'onde lumineuse de pompage (150a, 150b, 112, 114) appliquant sur la fibre optique (130) les ondes lumineuses de pompage dans la même direction que la direction de déplacement de l'onde lumineuse d'entrée ;
l'amplificateur de Raman comprenant en outre un milieu de retardement (171, 172, 173) pour retarder l'onde lumineuse d'entrée d'un temps prédéterminé, le milieu de retardement (171, 172, 173) étant placé entre le moyen de détection de puissance d'entrée (141, 111) et le moyen d'application d'onde lumineuse de pompage (150a, 150b, 112, 114) dont les deux sont placés sur un chemin pour l'onde lumineuse d'entrée.

**6.** Amplificateur de Raman selon la revendication 5, dans lequel le temps prédéterminé est le temps depuis l'instant auquel le moyen de détection de puissance d'entrée (141, 111) détecte une valeur jusqu'à l'instant auquel l'unité de commande (160) réalise la commande.

**7.** Amplificateur de Raman selon la revendication 1, l'amplificateur de Raman comprenant en outre :

un moyen de détection de puissance de sortie (142, 113) qui est agencé pour détecter la puissance de l'onde lumineuse de sortie ; et
l'unité de commande (160) qui est agencée pour commander la puissance de l'onde lumineuse de pompage présentant la longueur d'onde la plus courte conformément à la fois au signal électrique et à la puissance de l'onde lumineuse de sortie détectée par le moyen de détection de puissance de sortie (142, 113).

**8.** Amplificateur de Raman selon la revendication 7, dans lequel l'unité de commande (160) est agencée pour commander la puissance de l'onde lumineuse de pompage présentant la longueur d'onde la plus courte conformément à la fois au signal électrique et à la puissance de l'onde lumineuse de sortie qui est détectée par le moyen de détection de puissance de sortie (142, 113), la puissance de l'onde lumineuse de sortie étant détectée à l'instant où un temps nécessaire pour que l'onde lumineuse d'entrée se déplace sur la fibre optique (130) s'est juste écoulé depuis l'instant où la puissance de l'onde lumineuse d'entrée est détectée.

FIG. 1

EP 1 589 623 B1

FIG. 2

FIG. 3

FIG. 4

EP 1 589 623 B1

EP 1 589 623 B1

FIG. 5

FIG. 6

FIG. 7

EP 1 589 623 B1

FIG. 8

EP 1 589 623 B1

FIG. 9

**FIG. 10**

FIG. 11

EP 1 589 623 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040052453 A

**Non-patent literature cited in the description**

- **Y. EMORI et al.** Broadband lossless DCF using Raman amplification pumped by multichannel WDM laser diodes. *Electron. Lett.,* 1998, vol. 34 (22), 2145-46